# EUROPEAN PATENT APPLICATION

(11) **EP 4 440 115 A1**
(43) Date of publication of application: **02.10.2024**
(21) Application number: 22909840.5
(22) Date of filing: 14.12.2022
(51) Int. Cl.: H04N 21/2187

(54) **LIVE BROADCAST ROOM PAGE DISPLAY METHOD, APPARATUS, DEVICE, AND STORAGE MEDIUM**

(30) Priority: 22.12.2021 CN 202111583699
(71) Applicant: Beijing Zitiao Network Technology Co., Ltd., Beijing 100190 (CN)
(72) Inventor: FAN, Teng, Beijing 100086 (CN); LI, Yijie, Beijing 100086 (CN); CHEN, Xu, Beijing 100086 (CN)
(74) Representative: Dentons UK and Middle East LLP
(86) International application number: PCT/CN2022/138954
(87) International publication number: WO 2023/116526

(57) **Abstract**

Provided are a live broadcast room page display method, an apparatus, a device and a storage medium. The method comprises: firstly, displaying a first clear screen mode interface of a target live broadcast room, and displaying, on the first clear screen mode interface, a live broadcast object display control determined on the basis of the type of live broadcast room to which the target live broadcast room belongs; then, when a trigger operation for the live broadcast object display control is received, displaying a live broadcast object corresponding to the target live broadcast room on the first clear screen mode interface.

## Description

### CROSS-REFERENCE TO RELATED APPLICATIONS

The present application claims the priority to the Chinese Patent Application No. 202111583699.5 entitled "LIVE BROADCAST ROOM PAGE DISPLAY METHOD, APPARATUS, DEVICE, AND STORAGE MEDIUM" filed on December 22, 2021, the disclosure of which is incorporated by reference herein in its entirety.

### TECHNICAL FIELD

The present disclosure relates to the technology field of the live, and in particular, to a live room page presentation method, an apparatus, a device, and a storage medium.

### BACKGROUND

With the continuous development of video live technology, demands for live functions have been increasingly diversified. In order to enable a user to have immersive watching experience, a clear screen function on a live room page has emerged.

### SUMMARY

In a first aspect, the present disclosure provides a page presentation method for a live room, which comprises:
displaying a first clear screen mode interface of a target live room, wherein the first clear screen mode interface has displayed thereon a live object presentation control which is determined based on a live room type to which the target live room belongs; and
in response to a trigger operation for the live object presentation control, presenting, on the first clear screen mode interface, a live object corresponding to the target live room.

In an optional implementation, the first clear screen mode interface further comprises an anchor identification of the target live room; and the method further comprises:
in response to a trigger operation for the anchor identification of the target live room, presenting, on the first clear screen mode interface, anchor information corresponding to the anchor identification.

In an optional implementation, after the displaying a first clear screen mode interface of a target live room, the method further comprises:
in response to a first trigger operation on the first clear screen mode interface of the target live room, displaying a second clear screen mode interface of the target live room, wherein the live object presentation control is hidden on the second clear screen mode interface.

In an optional implementation, the displaying a first clear screen mode interface of a target live room comprises:
in response to a second trigger operation on the second clear screen mode interface of the target live room, switching from the second clear screen mode interface to the first clear screen mode interface.

In an optional implementation, the method further comprises:
in response to a trigger operation for a clear screen mode starting control on a live page of the target live room, displaying the first clear screen mode interface or the second clear screen mode interface of the target live room.

In an optional implementation, after the displaying a first clear screen mode interface of a target live room, the method further comprises:
in response to an amplification trigger operation acting on the first clear screen mode interface or the second clear screen mode interface, performing, on the first clear screen mode interface or the second clear screen mode interface, amplification display on a live image of the target live room.

In an optional implementation, the first clear screen mode interface further comprises an explanation card which is used for presenting information of the live object being presented in or associated with the target live room, and the method further comprises:
in response to a trigger operation for the explanation card, presenting an interaction page of the live object corresponding to the explanation card.

In an optional implementation, the first clear screen mode interface further comprises an anchor identification of an associated live room of the target live room, and the method further comprises:
in response to a trigger operation for the anchor identification of the associated live room on the first clear screen mode interface of the target live room, presenting, on the first clear screen mode interface, anchor information corresponding to the anchor identification of the associated live room.

In an optional implementation, the method further comprises:
when a trigger operation of applying for a connection to an anchor of the target live room is received, determining whether the target live room is currently in a clear screen mode interface, wherein the clear screen mode interface comprises the first clear screen mode interface and the second clear screen mode interface; and
if it is determined that the target live room is currently in the clear screen mode interface, displaying prompt information for exiting the clear screen mode, and controlling the target live room to switch from the clear screen mode interface to a non-clear screen mode interface.

In an optional implementation, the displaying a first clear screen mode interface of a target live room comprises:
when it is determined that the live room type of the target live room is a resource promotion-type live room, presenting, on the first clear screen mode interface of the target live room, a resource presentation control; and
correspondingly, the in response to a trigger operation for the live object presentation control, presenting, on the first clear screen mode interface, a live object corresponding to the target live room, comprises:
   in response to a trigger operation for the resource presentation control, presenting, on the first clear screen mode interface, a resource list corresponding to the target live room;
      or,
   when it is determined that the live room type of the target live room is an activity-type live room, presenting, on the first clear screen mode interface of the target live room, an activity joining control; and
   correspondingly, the in response to a trigger operation for the live object presentation control, presenting, on the first clear screen mode interface, a live object corresponding to the target live room, comprises:
      in response to a trigger operation for the activity joining control, presenting, on the first clear screen mode interface, activity joining guidance information corresponding to the target live room.

In a second aspect, the present disclosure further provides a page presentation method for a live room, comprising:
displaying a first clear screen mode interface of a target live room, wherein the first clear screen mode interface has displayed thereon a live object presentation control which is determined based on a live room type to which the target live room belongs; and
in response to a first trigger operation on the first clear screen mode interface of the target live room, displaying a second clear screen mode interface of the target live room, wherein the live object presentation control is hidden on the second clear screen mode interface.

In an optional implementation, after the in response to a first trigger operation on the first clear screen mode interface of the target live room, displaying a second clear screen mode interface of the target live room, the method further comprises:
in response to a second trigger operation on the second clear screen mode interface of the target live room, switching from the second clear screen mode interface to the first clear screen mode interface.

In an optional implementation, the method further comprises:
in response to an amplification trigger operation acting on the first clear screen mode interface or the second clear screen mode interface, performing, on the first clear screen mode interface or the second clear screen mode interface, amplification display on a live image of the target live room.

In an optional implementation, the first clear screen mode interface further comprises an anchor identification of the target live room; and the method further comprises:
in response to a trigger operation for the anchor identification of the target live room, presenting, on the first clear screen mode interface, anchor information corresponding to the anchor identification.

In a third aspect, the present disclosure provides a page presentation apparatus for a live room, which comprises:
a first display module configured to display a first clear screen mode interface of a target live room, wherein the first clear screen mode interface has displayed thereon a live object presentation control which is determined based on a live room type to which the target live room belongs; and
a first presentation module configured to, in response to a trigger operation for the live object presentation control, present, on the first clear screen mode interface, a live object corresponding to the target live room.

In a fourth aspect, the present disclosure provides a page presentation apparatus for a live room, which comprises:
a second display module configured to display a first clear screen mode interface of a target live room, wherein the first clear screen mode interface has displayed thereon a live object presentation control which is determined based on a live room type to which the target live room belongs; and
a third display module configured to, in response to a first trigger operation on the first clear screen mode interface of the target live room, display a second clear screen mode interface of the target live room, wherein the live object presentation control is hidden on the second clear screen mode interface.

In a fifth aspect, the present disclosure provides a non-transitory computer-readable storage medium having stored therein instructions which, when executed on a terminal device, causes the terminal device to implement the method described above.

In a sixth aspect, the present disclosure provides a device comprising: a memory and a processor, wherein the memory has stored thereon a computer program, and the processor, when executing the computer program, implements the method described above.

In a seventh aspect, the present disclosure provides a computer program product comprising a computer program or instructions which, when executed by a processor, causes the processor to implement the method described above.

In an eighth aspect, the present disclosure provides a computer program which, when executed by a processor, causes the processor to implement the method described above.

### BRIEF DESCRIPTION OF THE DRAWINGS

The accompanying drawings herein, which are incorporated in and constitute a part of this specification, illustrate embodiments consistent with the present disclosure and, together with the description, serve to explain the principles of the present disclosure.

In order to more clearly illustrate technical solutions in the embodiments of the present disclosure or the related art, the drawings required for use in the description of the embodiments or the related art are briefly introduced below, and for one of ordinary skill in the art, other drawings may be obtained according to the drawings without paying creative efforts.
Fig. 1 is a flow diagram of a page presentation method for a live room according to an embodiment of the present disclosure;
Fig. 2 is a schematic diagram of a first clear screen mode interface according to an embodiment of the present disclosure;
Fig. 3 is a schematic diagram of a presentation page of a live object corresponding to a target live room according to an embodiment of the present disclosure;
Fig. 4 is a schematic diagram of a presentation page of anchor information according to an embodiment of the present disclosure;
Fig. 5 is a schematic diagram of another presentation page of anchor information according to an embodiment of the present disclosure;
Fig. 6 is a schematic diagram of another first clear screen mode interface according to an embodiment of the present disclosure;
Fig. 7 is a schematic diagram of a second clear screen mode interface according to an embodiment of the present disclosure;
Fig. 8 is a flow diagram of another page presentation method for a live room according to an embodiment of the present disclosure;
Fig. 9 is a schematic structural diagram of a page presentation apparatus for a live room according to an embodiment of the present disclosure;
Fig. 10 is a schematic structural diagram of a page presentation apparatus for a live room according to an embodiment of the present disclosure; and
Fig. 11 is a schematic structural diagram of a page presentation device for a live room according to an embodiment of the present disclosure.

### DETAILED DESCRIPTION

In order that the above objectives, features and advantages of the present disclosure can be more clearly understood, solutions of the present disclosure will be further described below. It should be noted that, without conflict, embodiments of the present disclosure and features in the embodiments may be combined with each other.

In the following description, numerous specific details are set forth in order to provide a thorough understanding of the present disclosure, but the present disclosure may be implemented in other ways different from those described herein; it is apparent that the embodiments in the description are only a part of the embodiments of the present disclosure, rather than all of them.

The existing clear screen function is simple, and cannot meet diversified requirements of a user, so that the user experience is affected.

In the face of an increasing order of magnitude of live users and gradually diversified live scenes, the existing clear screen function appears so much simple that in a process of watching a live in a clear screen mode at present, the user cannot enable an object information viewing function in the clear screen mode if he/she wants to view information on an object presented in a current live room, but he/she needs to exit the clear screen mode, and then can view the information on the object presented in the current live room; and apparently, the user operation is complicated, which seriously affects the experience that the watching user watches the live.

In order to improve the experience that the user watches the live, an embodiment of the present disclosure provides a page presentation method for a live room, comprising: firstly displaying a first clear screen mode interface of a target live room, and presenting, on the first clear screen mode interface, a live object presentation control determined based on a live room type to which the target live room belongs, and then, when a trigger operation for the live object presentation control is received, presenting a live object corresponding to the target live room on the first clear screen mode interface. It can be seen that in the embodiment of the present disclosure, it is supported in the clear screen mode to present the presentation control for the live object within the live room, and by triggering the live object presentation control, the corresponding object can be presented, meeting the requirement of the user for performing corresponding interaction for the live object, and improving the experience that the user watches the live.

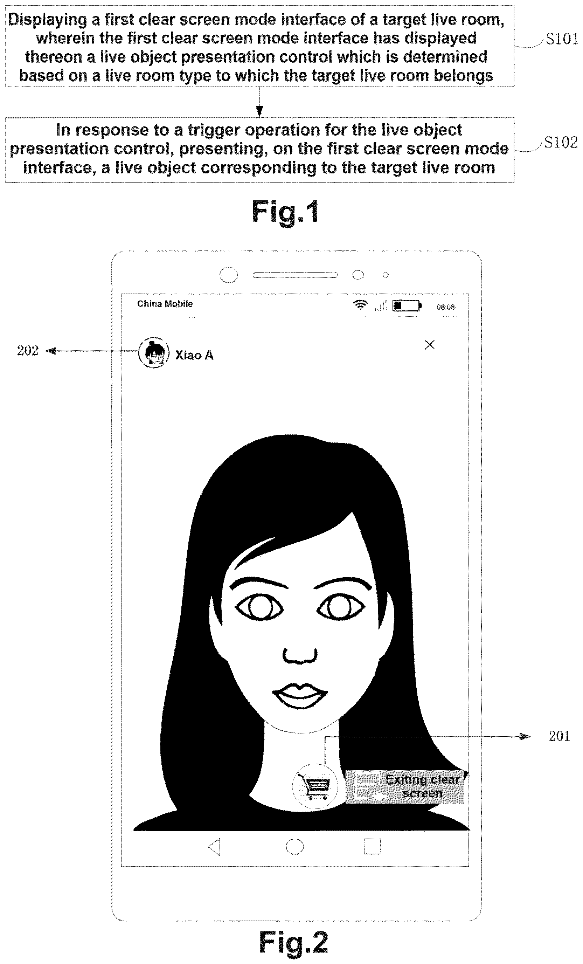

Based on this, an embodiment of the present disclosure provides a page presentation method for a live room, and referring to Fig. 1 which is a flow diagram of a page presentation method for a live room according to an embodiment of the present disclosure, the method comprises:
S101: displaying a first clear screen mode interface of a target live room.

The first clear screen mode interface comprises a live object presentation control, and the live object presentation control is determined based on a live room type to which the target live room belongs.

In the embodiment of the present disclosure, the target live room may be any type of live room, such as an e-commerce-type live room, a local life-type live room, a voice connection live room, or the like.

In the embodiment of the present disclosure, the first clear screen mode interface belongs to a presentation interface in a clear screen mode, and the first clear screen mode interface of the target live room has presented thereon a live object presentation control which is determined based on a live room type to which the target live room belongs.

In an optional implementation, when it is determined that the live room type of the target live room belongs to a resource promotion-type live room, a resource presentation control, such as a shopping cart identification, is presented on the first clear screen mode interface of the target live room. As shown in Fig. 2, which is a schematic diagram of a first clear screen mode interface according to an embodiment of the present disclosure, a live object presentation control 201 determined based on a live room type of the target live room is presented on the first clear screen mode interface.

In another optional implementation, when it is determined that the live room type of the target live room is an activity-type live room, an activity joining control is presented on the first clear screen mode interface of the target live room. When it is determined that the live room type of the target live room is a life service-type live room, a life service type control, such as a windmill identification, is presented on the first clear screen mode interface of the target live room, and therefore, by presenting the live object presentation control in the first clear screen mode, it is convenient for a user to quickly obtain information of the live room type.

It is worth noting that, for a target live room of which the live room type belongs to an applet-type live room, a ticket purchase-type live room, a KTV live room or a voice connection live room, it is also possible to present, on a first clear screen mode interface of the target live room, a live object presentation control determined based on the live room type to which the target live room belongs, for example, present, on the first clear screen mode interface, a voice connection control determined based on the type of voice connection live room, or the like; the live object presentation control corresponds to the live room type, a live room of a different type corresponds to a different live object presentation control, and the live object presentation control has displayed thereon a key feature of its corresponding live room type, so that the user can determine the live room type of the current live room based on the live object presentation control.

S102 : in response to a trigger operation for the live object presentation control, presenting, on the first clear screen mode interface, a live object corresponding to the target live room.

In the embodiment of the present disclosure, the live object presentation control corresponds to the live object, the live object presentation control is used for triggering presenting the corresponding live object, and a different live object presentation control triggers presenting a different live object. On the first clear screen mode interface of the target live room, if the trigger operation for the live object presentation control is received, the live object corresponding to the target live room can be presented on the first clear screen mode interface.

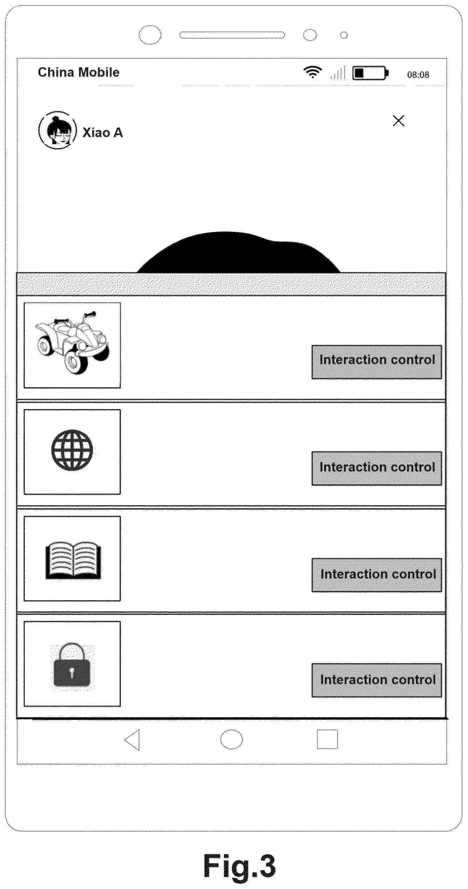

As shown in Fig. 3, it is a schematic diagram of a presentation page of a live object corresponding to a target live room according to an embodiment of the present disclosure. In order to reduce the influence on the watching experience of the watching user, in the embodiment of the present disclosure, the live object corresponding to the target live room can be presented in a semi-floating window form on the first clear screen mode interface, so that the user can view the live object corresponding to the target live room while watching the live in the clear screen mode, improving the experience of the watching user.

In the embodiment of the present disclosure, the live object includes at least one of a good or a service provided by the live room. The good may be a real good or a virtual good. The good may be, for example, a good presented or sold in the live room. Likewise, the live object is determined based on the live room type to which the target live room belongs.

More specifically, when the live room is an e-commerce-type live room, in response to a trigger operation for, for example, a shopping cart identification, a list of goods sold in the live room may be presented on the first clear screen mode interface. When the live room is a game-type live room, in response to a trigger operation for a corresponding live object presentation control (such as a gamepad identification), a game detail/download page of a game presented in the live room may be presented on the first clear screen mode interface. In addition, when the live room is a show-type or performance-type live room, in response to a trigger operation for a corresponding live object presentation control (such as a voice connection button control), a voice connection prompt pop-up window can be presented on the first clear screen mode interface. Alternatively, when the live room is a show-type or performance-type live room, a gift control may be displayed as the live object presentation control, and, in response to a trigger operation for the gift control, a gift panel may be presented on the first clear screen mode interface.

In an optional implementation, the first clear screen mode interface of the target live room may further include an anchor identification of the target live room, for example, the anchor identification may be an anchor icon or the like, for example, an anchor icon 202 on the above first clear screen mode interface shown in Fig. 2.

In a practical application, when a trigger operation for the anchor identification presented on the first clear screen mode interface is received, anchor information corresponding to the anchor identification may be presented on the first clear screen mode interface. The anchor information can be an anchor data card, etc.

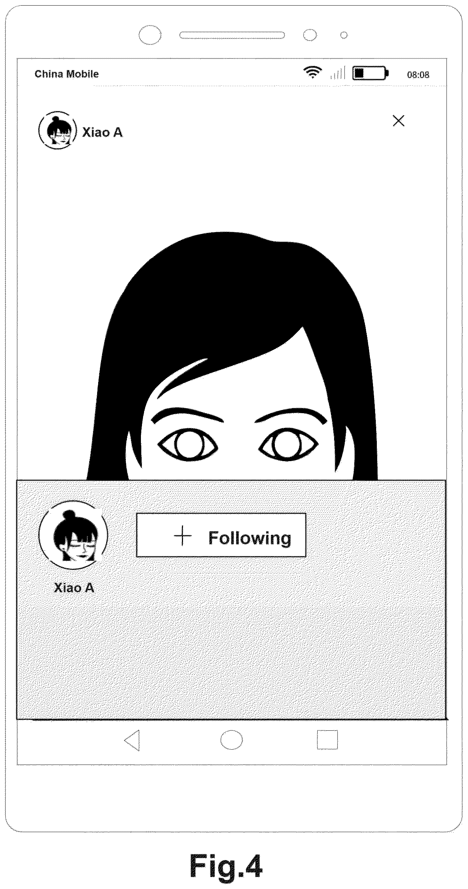

As shown in Fig. 4, it is a schematic diagram of a presentation page of anchor information according to an embodiment of the present disclosure. In order to reduce the influence on the watching experience of the watching user, in the embodiment of the present disclosure, the anchor information corresponding to the anchor identification may be presented in a semi-floating window form on the first clear screen mode interface, so that the user can view the anchor information while watching the live in the clear screen mode, improving the experience of the watching user.

In another optional implementation, if the target live room belongs to the live room type of a voice connection between anchors, the first clear screen mode interface of the target live room may further include an anchor identification of an associated live room of the target live room. When a trigger operation for the anchor identification of the associated live room of the target live room is received on the first clear screen mode interface, anchor information corresponding to the anchor identification of the associated live room can be presented on the first clear screen mode interface, wherein the associated live room can be a live room in voice connection with the target live room.

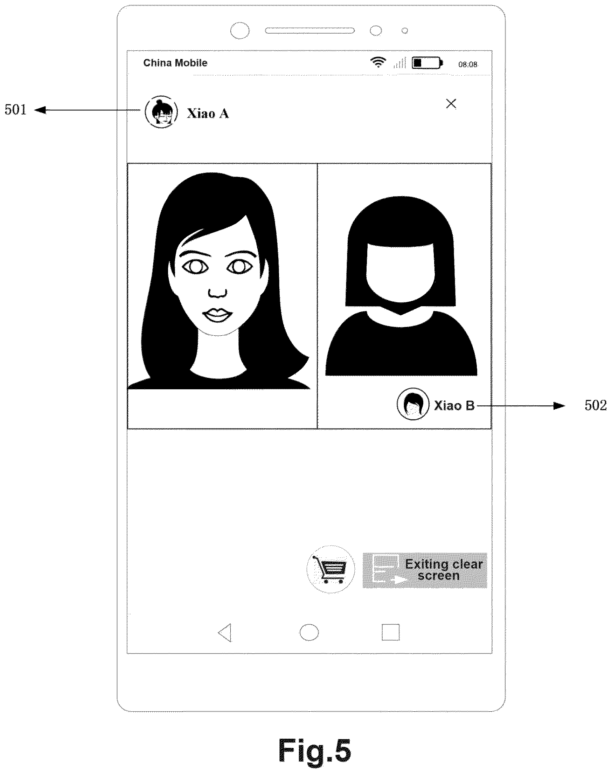

As shown in Fig. 5, it is a schematic diagram of another presentation page of anchor information according to an embodiment of the present disclosure. Anchors Xiao A and Xiao B of a target live room are in a voice connection state, and a live room of the anchor Xiao B is an associated live room of the target live room. A first clear screen mode interface of the target live room has presented thereon an anchor identification 501 corresponding to the anchor Xiao A and an anchor identification 502 corresponding to the anchor Xiao B. When a trigger operation for the anchor identification 502 corresponding to the anchor Xiao B on the first clear screen mode interface is received, anchor information corresponding to the anchor Xiao B is presented on the first clear screen mode interface.

It should be noted that the target live room in the embodiment of the present disclosure may also be a voice connection live room with more than two anchors, the first clear screen mode interface of the target live room has presented thereon anchor identifications of respective voice connection anchors in the voice connection live room, so that by triggering any anchor identification, anchor information corresponding to this anchor identification can be presented on the first clear screen mode interface.

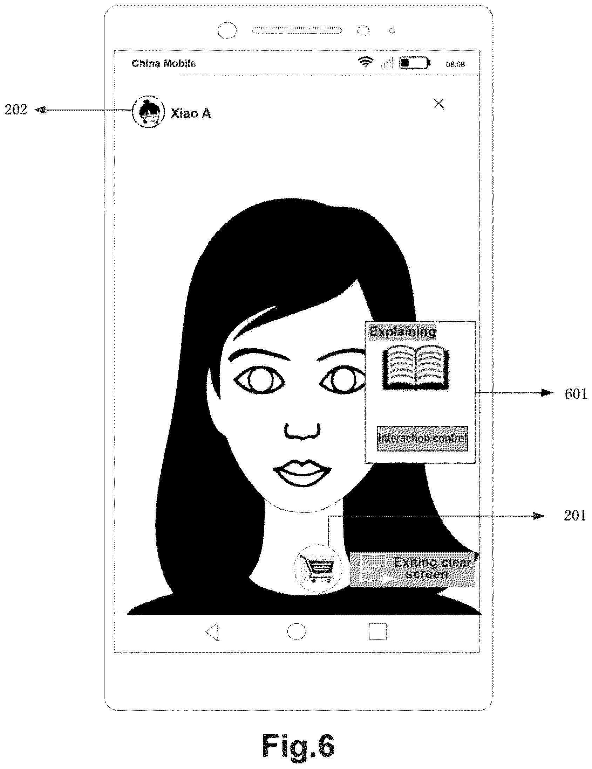

In another optional implementation, the first clear screen mode interface of the target live room may further include an explanation card for presenting information of the live object being presented in or associated with the target live room. As shown in Fig. 6, which is a schematic diagram of another first clear screen mode interface according to an embodiment of the present disclosure, an explanation card 601 is presented on the first clear screen mode interface. If an object corresponding to the explanation card is an object being explained or presented in the target live room, a word "explaining" can be identified on the explanation card 601 on the first clear screen mode interface, so that the watching user can more intuitively learn the current object presentation situation of the target live room.

In a practical application, when a trigger operation for the explanation card is received on the first clear screen mode interface, an interaction page of the live object corresponding to the explanation card can be presented on the first clear screen mode interface. For example, when a trigger operation for the explanation card 601 shown in Fig. 6 is received, an interaction page of the live object corresponding to the explanation card, for example, an information viewing page for the live object corresponding to the explanation card, or the like, may be presented on the first clear screen mode interface.

In the page presentation method for a live room provided in the embodiment of the present disclosure, a first clear screen mode interface of a target live room is displayed firstly, and a live object presentation control determined based on a live room type to which the target live room belongs is presented on the first clear screen mode interface, and then when a trigger operation for the live object presentation control is received, a live object corresponding to the target live room is presented on the first clear screen mode interface. It can be seen that in the embodiment of the present disclosure, it is supported in the clear screen mode to present the presentation control for the live object within the live room, and by triggering the live object presentation control, the corresponding object can be presented, meeting the requirement of the user for performing corresponding interaction for the live object, and also meeting the requirement of watching the live in a relatively immersive way, and improving the experience that the user watches the live.

In addition, in the embodiment of the present disclosure, it is also possible to support, in the clear screen mode, a function of presenting anchor information by triggering an anchor identification, a function of presenting an explanation card, and the like, which enriches the functions in the clear screen mode while ensuring less influence on that the user watches the live, and improves the experience that the user watches the live.

Based on the content in the above embodiment, an embodiment of the present disclosure further provides a second clear screen mode interface, wherein a first clear screen mode and a second clear screen mode in the present disclosure are two different clear screen functions in a live scene, and correspond to two different clear screen mode presentation interfaces, namely, the first clear screen mode interface and the second clear screen mode interface, respectively.

In an optional implementation, the target live room, in the clear screen mode, supports the switching of the presentations between the first clear screen mode interface and the second clear screen mode interface. Specifically, when a first trigger operation on the first clear screen mode interface of the target live room is received, it is possible to switch from the first clear screen mode interface to the second clear screen mode interface, to display the second clear screen mode interface of the target live room. The live object presentation control is hidden on the second clear screen mode interface. In addition, the first trigger operation can be a click acting on the first clear screen mode interface, such as a single-click trigger operation; the first trigger operation can also be a swipe on the first clear screen mode interface, such as a swipe left/right trigger operation; the first trigger operation can also be a long-press trigger operation on the first clear screen mode interface; and the like; and in the present disclosure, the switching to the second (or first) clear screen mode interface is enabled by the trigger operation acting on the first (or second) clear screen mode interface, and therefore the interaction is simple, the mode switching is facilitated, enabling the user to efficiently enter the demanded mode for watching the live, so that the user experience is improved.

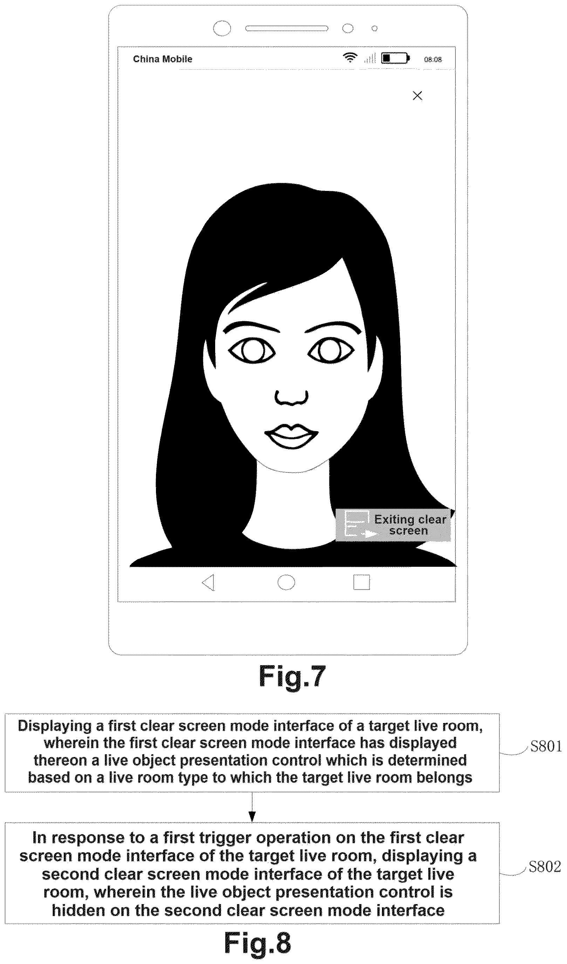

As shown in Fig. 7, which is a schematic diagram of a second clear screen mode interface according to an embodiment of the present disclosure, the live object presentation control on the first clear screen mode interface of the target live room is hidden on the second clear screen mode interface, and in addition, the anchor identification on the first clear screen mode interface of the target live room may also be hidden on the second clear screen mode interface. Therefore, watching the live in an completely immersive way can be realized, meeting the diversified requirements of the user, and improving the experience that the user watches the live.

In a practical application, when the second clear screen mode interface of the target live room is displayed, if a second trigger operation is received, it is switched from the second clear screen mode interface to the first clear screen mode interface to display the first clear screen mode interface of the target live room, as shown in Fig. 2. It can be seen that in the embodiment of the present disclosure, when the target live room is in the clear screen mode, the switching of the presentations between the first clear screen mode interface and the second clear screen mode interface is supported.

In an optional implementation, a clear screen mode starting control is provided on a live page of the target live room, so that when a trigger operation for the clear screen mode starting control is received, it is possible to enter the clear screen mode of the target live room, to display the first clear screen mode interface or the second clear screen mode interface of the target live room. In addition, in the clear screen mode, the switching of the display interface of the target live room between the first clear screen mode interface and the second clear screen mode interface is supported.

It should be noted that, the live page provided with the clear screen mode starting control refers to a presentation page including complete information of the live room, and may be, for example, a live page including a live video image, comment information, anchor information, a comment control, a live object presentation control, and the like.

In an optional implementation, in order to further enrich the page presentation function of the live room, it is possible to support amplification display of the live page of the target live room in the clear screen mode, to meet the requirement of the user for amplification display of the live page.

In a practical application, when an amplification trigger operation acting on the first clear screen mode interface or the second clear screen mode interface of the target live room is received, amplification display on the live image of the target live room is performed on the first clear screen mode interface or the second clear screen mode interface. The amplification trigger operation can include a preset amplification hand gesture operation triggered on the first clear screen mode interface or the second clear screen mode interface, and the amplification trigger operation can also include a double-click operation or the like on the first clear screen mode interface or the second clear screen mode interface, therefore meeting the requirement of the user for viewing the amplification effect.

In addition, the first clear screen mode interface and the second clear screen mode interface provided in the embodiment of the present disclosure further include an exit clear screen control for exiting the clear screen mode of the target live room and redisplaying the live page of the target live room.

In a practical application, when a trigger operation of applying for a connection to an anchor of the target live room is received, firstly, it can be determined whether the target live room is currently in a clear screen mode interface, and if the target live room is currently in the clear screen mode interface, prompt information for exiting the clear screen mode is displayed to prompt the user who is requested to be connected that the connection is not supported in the clear screen mode. In addition, in order to facilitate the user applying for the connection to the anchor, in the embodiment of the present disclosure, it is also possible to prompt the user to switch the target live room from the clear screen mode interface to a non-clear screen mode interface, i. e . , the live page of the target live room, and then to trigger the operation of applying for the connection to the anchor of the target live room. The clear screen mode interface includes the first clear screen mode interface and the second clear screen mode interface.

According to the page presentation method for a live room provided in the embodiment of the present disclosure, the clear screen function in a live scene is enriched, improving the experience that the user watches the live.

An embodiment of the present disclosure provides another page presentation method for a live room, and referring to Fig. 8, which is a flow diagram of a page presentation method for a live room according to an embodiment of the present disclosure, the method comprises:
S801: displaying a first clear screen mode interface of a target live room.

The first clear screen mode interface has displayed thereon a live object presentation control, and the live object presentation control is determined based on a live room type to which the target live room belongs.

In the embodiment of the present disclosure, the target live room may be any type of live room, such as an e-commerce-type live room, a local life-type live room, a voice connection live room, and the like.

In the embodiment of the present disclosure, the first clear screen mode interface belongs to a presentation interface in a clear screen mode, and the first clear screen mode interface of the target live room has presented thereon a live object presentation control which is determined based on a live room type to which the target live room belongs.

S802: in response to a first trigger operation on the first clear screen mode interface of the target live room, displaying a second clear screen mode interface of the target live room.

The live object presentation control is hidden on the second clear screen mode interface.

The first clear screen mode and the second clear screen mode in the embodiment of the present disclosure are two different clear screen functions in a live scene, and correspond to two different clear screen mode presentation interfaces, namely, the first clear screen mode interface and the second clear screen mode interface, respectively. The first clear screen mode interface may be understood with reference to Fig. 2 above, and the second clear screen mode interface may be understood with reference to Fig. 7 above.

In an optional implementation, the target live room, in the clear screen mode, supports the switching of the presentations between the first clear screen mode interface and the second clear screen mode interface. Specifically, when the first trigger operation on the first clear screen mode interface of the target live room is received, it is possible to switch from the first clear screen mode interface to the second clear screen mode interface, to display the second clear screen mode interface of the target live room. The live object presentation control is hidden on the second clear screen mode interface. In addition, the first trigger operation may be a click acting on the first clear screen mode interface, such as a single-click trigger operation; the first trigger operation can also be a swipe on the first clear screen mode interface, such as a swipe left/right trigger operation; the first trigger operation can also be a long-press trigger operation on the first clear screen mode interface; and the like; and in the present disclosure, switching to the second (or first) clear screen mode interface is enabled by the trigger operation acting on the first (or second) clear screen mode interface, and therefore the interaction is simple, facilitating the mode switching, and improving the user experience.

In an optional implementation, in response to a second trigger operation on the second clear screen mode interface of the target live room, it is switched from the second clear screen mode interface to the first clear screen mode interface.

In an optional implementation, in response to a trigger operation for the live object presentation control on the first clear screen mode interface of the target live room, a live object corresponding to the target live room is presented on the first clear screen mode interface.

In an optional implementation, in response to a trigger operation for an anchor identification of the target live room, anchor information corresponding to the anchor identification is presented on the first clear screen mode interface.

It should be noted that, the embodiment of the present disclosure may be understood with reference to the above embodiment, which is not repeated herein to avoid duplication.

In the page presentation method for a live room provided in the embodiment of the present disclosure, it is supported in the clear screen mode to present the live object presentation control, so that a user can view the information on the object presented within the live room without exiting the clear screen mode in the process of watching the live, in addition, the switching display between at least two clear screen mode interfaces is also supported in the clear screen mode, which improve the experience that the user watches the live.

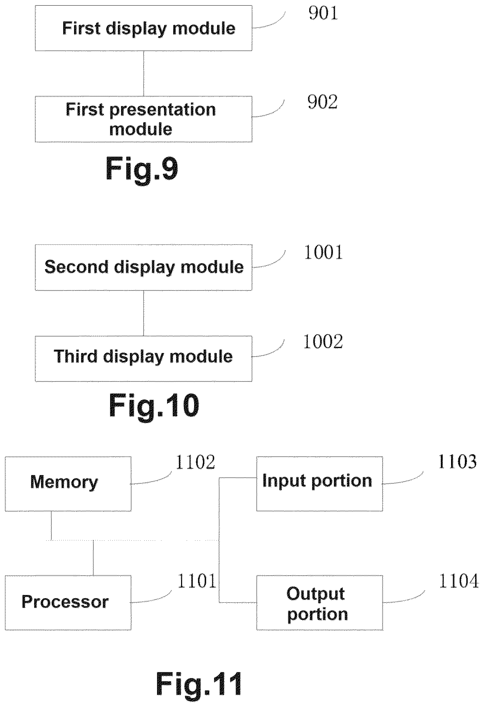

Based on the same inventive concept as the above embodiment, an embodiment of the present disclosure further provides a page presentation apparatus for a live room, and referring to Fig. 9, which is a schematic structural diagram of a page presentation apparatus for a live room according to an embodiment of the present disclosure, the apparatus comprises:
a first display module 901 configured to display a first clear screen mode interface of a target live room, wherein the first clear screen mode interface has displayed thereon a live object presentation control which is determined based on a live room type to which the target live room belongs; and
a first presentation module 902 configured to, in response to a trigger operation for the live object presentation control, present, on the first clear screen mode interface, a live object corresponding to the target live room.

In an optional implementation, the first clear screen mode interface further comprises an anchor identification of the target live room; and the apparatus further comprises:
a second presentation module configured to, in response to a trigger operation for the anchor identification of the target live room, present, on the first clear screen mode interface, anchor information corresponding to the anchor identification.

In an optional implementation, the apparatus further comprises:
a fourth display module configured to, in response to a first trigger operation on the first clear screen mode interface of the target live room, display a second clear screen mode interface of the target live room, wherein the live object presentation control is hidden on the second clear screen mode interface.

In an optional implementation, the first display module is specifically configured to:
in response to a second trigger operation on the second clear screen mode interface of the target live room, switch from the second clear screen mode interface to the first clear screen mode interface.

In an optional implementation, the apparatus further comprises:
a fifth display module configured to, in response to a trigger operation for a clear screen mode starting control on a live page of the target live room, display the first clear screen mode interface or the second clear screen mode interface of the target live room.

In an optional implementation, the apparatus further comprises:
an amplification module configured to, in response to an amplification trigger operation acting on the first clear screen mode interface or the second clear screen mode interface, perform, on the first clear screen mode interface or the second clear screen mode interface, amplification display on a live image of the target live room.

In an optional implementation, the first clear screen mode interface further comprises an explanation card which is used for presenting information of the live object being presented in or associated with the target live room, and the apparatus further comprises:
a third presentation module configured to, in response to a trigger operation for the explanation card, present an interaction page of the live object corresponding to the explanation card.

In an optional implementation, the first clear screen mode interface further comprises an anchor identification of an associated live room of the target live room, and the apparatus further comprises:
a fourth presentation module configured to, in response to a trigger operation for the anchor identification of the associated live room on the first clear screen mode interface of the target live room, present, on the first clear screen mode interface, anchor information corresponding to the anchor identification of the associated live room.

In an optional implementation, the apparatus further comprises:
a first determination module configured to, when a trigger operation of applying for a connection to an anchor of the target live room is received, determine whether the target live room is currently in a clear screen mode interface, wherein the clear screen mode interface comprises the first clear screen mode interface and the second clear screen mode interface; and
a sixth display module configured to, if it is determined that the target live room is currently in the clear screen mode interface, display prompt information for exiting the clear screen mode.

In an optional implementation, the first display module comprises a first presentation sub-module or a third presentation sub-module:
wherein the first presentation sub-module is configured to, when it is determined that the live room type of the target live room is a resource promotion-type live room, present, on the first clear screen mode interface of the target live room, a resource presentation control; and
correspondingly, the first presentation module comprises:
   a second presentation sub-module configured to, in response to a trigger operation for the resource presentation control, present, on the first clear screen mode interface, a resource list corresponding to the target live room; and
   wherein the third presentation sub-module is configured to, when it is determined that the live room type of the target live room is an activity-type live room, present, on the first clear screen mode interface of the target live room, an activity joining control; and
   correspondingly, the first presentation module comprises:
      a fourth presentation sub-module configured to, in response to a trigger operation for the activity joining control, present, on the first clear screen mode interface, activity joining guidance information corresponding to the target live room.

In the page presentation apparatus for a live room provided in the embodiment of the present disclosure, a first clear screen mode interface of a target live room is displayed firstly, and a live object presentation control determined based on a live room type to which the target live room belongs is presented on the first clear screen mode interface, and then, when a trigger operation for the live object presentation control is received, a live object corresponding to the target live room is presented on the first clear screen mode interface. It can be seen that in the embodiment of the present disclosure, it is supported in the clear screen mode to present the live object within the live room, and therefore a user can view the information on the object presented in the live room without exiting the clear screen mode in the process of watching the live, which improves the experience that the user watches the live.

Further, an embodiment of the present disclosure further provides a page presentation apparatus for a live room, and referring to Fig. 10, which is a schematic structural diagram of another page presentation apparatus for a live room according to an embodiment of the present disclosure, the apparatus comprises:
a second display module 1001 configured to display a first clear screen mode interface of a target live room, wherein the first clear screen mode interface has displayed thereon a live object presentation control which is determined based on a live room type to which the target live room belongs; and
a third display module 1002 configured to, in response to a first trigger operation on the first clear screen mode interface of the target live room, display a second clear screen mode interface of the target live room, wherein the live object presentation control is hidden on the second clear screen mode interface.

In an optional implementation, the apparatus further comprises:
a seventh display module configured to, in response to a second trigger operation on the second clear screen mode interface of the target live room, switch from the second clear screen mode interface to the first clear screen mode interface.

In an optional implementation, the apparatus further comprises:
a fifth presentation module configured to, in response to an amplification trigger operation acting on the first clear screen mode interface or the second clear screen mode interface, perform, on the first clear screen mode interface or the second clear screen mode interface, amplification display on a live image of the target live room.

In an optional implementation, the first clear screen mode interface further comprises an anchor identification of the target live room; and the apparatus further comprises:
a sixth presentation module configured to, in response to a trigger operation for the anchor identification of the target live room, present, on the first clear screen mode interface, anchor information corresponding to the anchor identification.

In the page presentation apparatus for a live room provided in the embodiment of the present disclosure, it is supported in the clear screen mode to present the live object presentation control, so that a user can view the information on the object presented within the live room without exiting the clear screen mode in the process of watching the live, in addition, the switching display between at least two clear screen mode interfaces is also supported in the clear screen mode, which improve the experience that the user watches the live.

In addition to the above method and apparatus, an embodiment of the present disclosure further provides a non-transitory computer-readable storage medium having stored therein instructions which, when executed on a terminal device, causes the terminal device to implement the page presentation method for a live room according to the embodiment of the present disclosure.

An embodiment of the present disclosure further provides a computer program product comprising a computer program or instructions which, when executed by a processor, causes the processor to implement the page presentation method for a live room according to the embodiment of the present disclosure.

An embodiment of the present disclosure further provides a computer program which, when executed by a processor, causes the processor to implement the page presentation method for a live room according to the embodiment of the present disclosure.

In addition, an embodiment of the present disclosure further provides a page presentation device for a live room, and referring to Fig. 11, the device comprises:
a processor 1101, a memory 1102, an input portion 1103, and an output portion 1104. The number of the processor 1101 in the page presentation device for the live room may be one or more, taking one processor as an example in Fig. 11. In some embodiments of the present disclosure, the processor 1101, the memory 1102, the input portion 1103, and the output portion 1104 may be connected by a bus or another way, wherein the connection by a bus is taken as an example in Fig. 11.

The memory 1102 may be used for storing software programs and modules, and the processor 1101 performs various functional applications and data processing of the page presentation device for the live room by executing the software programs and modules stored in the memory 1102. The memory 1102 may mainly include a program storage area and a data storage area, wherein the program storage area may store an operating system, an application required for at least one function, and the like. Furthermore, the memory 1102 may include a high speed random access memory, and may also include a non-volatile memory, such as at least one magnetic disk storage device, flash memory device, or other volatile solid state storage devices. The input portion 1103 may be used for receiving input numeric or character information and generating signal inputs related to user settings and function controls of the page presentation device for the live room.

Specifically, in this embodiment, the processor 1101 can load executable files corresponding to a process of one or more applications into the memory 1102 according to the following instructions, and the processor 1101 executes the applications stored in the memory 1102, thereby implementing various functions of the page presentation device for the live room.

It should be noted that, relational terms such as "first" and "second", herein, are only used for distinguishing one entity or operation from another entity or operation without necessarily requiring or implying any such actual relation or order between these entities or operations. Moreover, the term "comprise", "include", or any other variation thereof, is intended to encompass a non-exclusive inclusion, such that a process, method, article, or device comprising a list of elements not only includes those elements but also includes other elements not expressly listed, or also includes elements inherent to such a process, method, article, or device. Without more limitations, an element defined by a statement "comprising a ···" does not exclude the presence of another identical element in a process, method, article, or device that includes the element.

The above only describes specific embodiments of the present disclosure, which enable those skilled in the art to understand or implement the present disclosure. Various modifications to these embodiments will be apparent to those skilled in the art, and the general principles defined herein may be implemented in other embodiments without departing from the spirit or scope of the present disclosure. Therefore, the present disclosure will not be limited to these embodiments described herein, but conform to the widest scope consistent with the principles and novel features disclosed herein.

## Claims

1. A page presentation method for a live room, comprising:
displaying a first clear screen mode interface of a target live room, wherein the first clear screen mode interface has displayed thereon a live object presentation control which is determined based on a live room type to which the target live room belongs; and
in response to a trigger operation for the live object presentation control, presenting, on the first clear screen mode interface, a live object corresponding to the target live room.

2. The method according to claim 1, wherein, the first clear screen mode interface further comprises an anchor identification of the target live room; and the method further comprises:
in response to a trigger operation for the anchor identification of the target live room, presenting, on the first clear screen mode interface, anchor information corresponding to the anchor identification.

3. The method according to claim 1, after the displaying a first clear screen mode interface of a target live room, further comprising:
in response to a first trigger operation on the first clear screen mode interface of the target live room, displaying a second clear screen mode interface of the target live room, wherein the live object presentation control is hidden on the second clear screen mode interface.

4. The method according to claim 3, wherein the displaying a first clear screen mode interface of a target live room comprises :
in response to a second trigger operation on the second clear screen mode interface of the target live room, switching from the second clear screen mode interface to the first clear screen mode interface.

5. The method according to claim 4, further comprising:
in response to a trigger operation for a clear screen mode starting control on a live page of the target live room, displaying the first clear screen mode interface or the second clear screen mode interface of the target live room.

6. The method according to any of claims 3-5, further comprising:
in response to an amplification trigger operation acting on the first clear screen mode interface or the second clear screen mode interface, performing, on the first clear screen mode interface or the second clear screen mode interface, amplification display on a live image of the target live room.

7. The method according to claim 1, wherein the first clear screen mode interface further comprises an explanation card which is used for presenting information of the live object being presented in or associated with the target live room, and the method further comprises:
in response to a trigger operation for the explanation card, presenting an interaction page of the live object corresponding to the explanation card.

8. The method according to claim 1 or 2, wherein the first clear screen mode interface further comprises an anchor identification of an associated live room of the target live room, and the method further comprises:
in response to a trigger operation for the anchor identification of the associated live room on the first clear screen mode interface of the target live room, presenting, on the first clear screen mode interface, anchor information corresponding to the anchor identification of the associated live room.

9. The method according to claim 3, further comprising:
when a trigger operation of applying for a connection to an anchor of the target live room is received, determining whether the target live room is currently in a clear screen mode interface, wherein the clear screen mode interface comprises the first clear screen mode interface and the second clear screen mode interface; and
if it is determined that the target live room is currently in the clear screen mode interface, displaying prompt information for exiting the clear screen mode.

10. The method according to claim 1, wherein the displaying a first clear screen mode interface of a target live room comprises :
when it is determined that the live room type of the target live room is a resource promotion-type live room, presenting, on the first clear screen mode interface of the target live room, a resource presentation control; and
correspondingly, the in response to a trigger operation for the live object presentation control, presenting, on the first clear screen mode interface, a live object corresponding to the target live room, comprises:
in response to a trigger operation for the resource presentation control, presenting, on the first clear screen mode interface, a resource list corresponding to the target live room;
or,
when it is determined that the live room type of the target live room is an activity-type live room, presenting, on the first clear screen mode interface of the target live room, an activity joining control; and
correspondingly, the in response to a trigger operation for the live object presentation control, presenting, on the first clear screen mode interface, a live object corresponding to the target live room, comprises:
in response to a trigger operation for the activity joining control, presenting, on the first clear screen mode interface, activity joining guidance information corresponding to the target live room.

11. A page presentation method for a live room, comprising:
displaying a first clear screen mode interface of a target live room, wherein the first clear screen mode interface has displayed thereon a live object presentation control which is determined based on a live room type to which the target live room belongs; and
in response to a first trigger operation on the first clear screen mode interface of the target live room, displaying a second clear screen mode interface of the target live room, wherein the live object presentation control is hidden on the second clear screen mode interface.

12. The method according to claim 11, after the in response to a first trigger operation on the first clear screen mode interface of the target live room, displaying a second clear screen mode interface of the target live room, further comprising:
in response to a second trigger operation on the second clear screen mode interface of the target live room, switching from the second clear screen mode interface to the first clear screen mode interface.

13. The method according to claim 11, further comprising:
in response to an amplification trigger operation acting on the first clear screen mode interface or the second clear screen mode interface, performing, on the first clear screen mode interface or the second clear screen mode interface, amplification display on a live image of the target live room.

14. The method according to claim 11, wherein the first clear screen mode interface further comprises an anchor identification of the target live room, and the method further comprises:
in response to a trigger operation for the anchor identification of the target live room, presenting, on the first clear screen mode interface, anchor information corresponding to the anchor identification.

15. A page presentation apparatus for a live room, comprising:
a first display module configured to display a first clear screen mode interface of a target live room, wherein the first clear screen mode interface has displayed thereon a live object presentation control which is determined based on a live room type to which the target live room belongs; and
a first presentation module configured to, in response to a trigger operation for the live object presentation control, present, on the first clear screen mode interface, a live object corresponding to the target live room.

16. A page presentation apparatus for a live room, comprising:
a second display module configured to display a first clear screen mode interface of a target live room, wherein the first clear screen mode interface has displayed thereon a live object presentation control which is determined based on a live room type to which the target live room belongs; and
a third display module configured to, in response to a first trigger operation on the first clear screen mode interface of the target live room, display a second clear screen mode interface of the target live room, wherein the live object presentation control is hidden on the second clear screen mode interface.

17. A non-transitory computer-readable storage medium having stored therein instructions which, when executed on a terminal device, causes the terminal device to implement the method according to any of claims 1-14.

18. A device, comprising: a memory and a processor, wherein the memory has stored thereon a computer program, and the processor, when executing the computer program, implements the method according to any of claims 1-14.

19. A computer program product comprising a computer program or instructions which, when executed by a processor, causes the processor to implement the method according to any of claims 1-14.

20. A computer program which, when executed by a processor, causes the processor to implement the method according to any of claims 1-14.
